# EUROPÄISCHE PATENTANMELDUNG

(11) **EP 4 325 695 A1**
(43) Veröffentlichungstag der Anmeldung: **21.02.2024**
(21) Anmeldenummer: 21936319.9
(22) Anmeldetag: 12.04.2021
(51) Int. Cl.: H02K 1/16, H02K 3/12

(54) **STATORANORDNUNG ZUR VERWENDUNG IN EINEM MOTOR UND MONTAGEVERFAHREN DAFÜR SOWIE MOTOR**

(71) Anmelder: Schaeffler Technologies AG & Co. KG, 91074 Herzogenaurach (DE)
(72) Erfinder: LIANG, Jie, Shanghai 201804 (CN); LI, Zhihao, Shanghai 201804 (CN)
(86) Internationale Anmeldenummer: PCT/CN2021/086586
(87) Internationale Veröffentlichungsnummer: WO 2022/217424

(57) **Zusammenfassung**

Die vorliegende Erfindung stellt eine Statoranordnung zur Verwendung in einem Motor und ein Montageverfahren dafür bereit. Die Statoranordnung umfasst einen Eisenkern (1), der einen zylindrischen Eisenkernkörper und eine Vielzahl von Eisenkernzähnen (11) umfasst, wobei zwischen jeweils zwei in Umfangsrichtung benachbarten Eisenkernzähnen (11) Leiterschlitze (1h) zum Aufnehmen von Leitern (3) gebildet sind, wobei Seitenwände jedes Leiterschlitzes (1h), die durch die Eisenkernzähne (11) gebildet sind, jeweils einen aufgeweiteten Abschnitt (111) umfassen, und wobei die aufgeweiteten Abschnitte (111) einander in Umfangsrichtung gegenüberliegen und sich allmählich weiter voneinander entfernen, da sich die beiden in Richtung radialer Öffnungen der Leiterschlitze (1h) erstrecken; und folienartige Isolatoren (2), die in den Leiterschlitzen (1h) derart aufgenommen sind, dass sie an Umfangswänden der Leiterschlitze (1h) angebracht sind, wobei die Enden der folienartigen Isolatoren (2) an den aufgeweiteten Abschnitten (111) angeordnet sind. Dadurch kommt es beim Einführen der Leiter in die Leiterschlitze nicht zu einer unerwünschten Behinderung zwischen den Leitern und den folienartigen Isolatoren. Die vorliegende Erfindung stellt auch einen Motor bereit, der die Statoranordnung zur Verwendung in einem Motor umfasst, der den gleichen vorteilhaften Effekt erzeugen kann.

## Beschreibung

### Technisches Gebiet

Die vorliegende Erfindung betrifft das Gebiet der Motoren und insbesondere eine Statoranordnung zur Verwendung in einem Motor und ein Montageverfahren dafür sowie einen Motor, der die Statoranordnung umfasst.

### Stand der Technik

Motoren gehören zu den herkömmlichen Energiequellen und haben ein breites Anwendungsspektrum, nicht nur für große Industrieanlagen, sondern auch für Fahrzeuge usw. Bei einer Statoranordnung zur Verwendung in einem Motor wird im Allgemeinen Isolierpapier, das an einer Umfangswand eines Leiterschlitzes angebracht wird, in dem Leiterschlitz eines Eisenkerns vorab angeordnet, und dann wird der Leiter (z. B. eine Wellenwicklung) über eine radiale Öffnung des Leiterschlitzes in den Leiterschlitz eingeführt. Das Isolierpapier wird zum Schutz des Leiters vor Beschädigungen beim Einführen des Leiters verwendet und kann auch einen Isolationsschutz zwischen dem Leiter und dem Eisenkern bereitstellen, nachdem der Leiter in den Leiterschlitz eingeführt wurde.

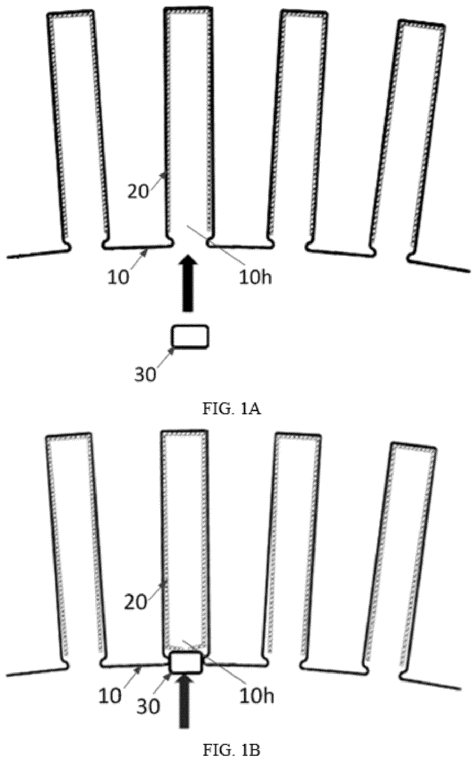

Unter Bezugnahme auf FIG. 1A und 1B ist in einer bestehenden Statoranordnung zur Verwendung in einem Motor der Eisenkern 10 der Statoranordnung mit einer Vielzahl von Leiterschlitzen 10h gebildet, die sich zu einer radial inneren Seite hin öffnen, und das Isolierpapier 20 ist in jedem Leiterschlitz 10h in einer Art und Weise installiert, dass es an der Umfangswand jedes Leiterschlitzes 10h angebracht ist, so dass der Leiter 30 durch die radiale Öffnung des Leiterschlitzes 10h von der radial inneren Seite her in den Leiterschlitz 10h eingeführt wird (wie durch Pfeile in den FIG. 1A und 1B gezeigt).

In der Statoranordnung ist der Leiterschlitz 10h ein gerader Schlitz, und aus dem Querschnitt des Eisenkerns 10 ist deutlich zu erkennen, dass der Leiterschlitz 10h als Rechteck dargestellt ist. Diese Konstruktion bringt die folgenden Probleme mit sich: Das Isolierpapier 20 passt möglicherweise nicht besonders gut in den Leiterschlitz 10h, wenn das Isolierpapier nicht an der Umfangswand des Leiterschlitzes 10h haftet, und der Leiter 30 kann ein Ende des Isolierpapiers 20 behindern und bewirken, dass sich das Ende des Isolierpapiers 20 beim Einführen des Leiters 30 in den Leiterschlitz 10h einrollt. Wie in FIG. 1B gezeigt, kann das Ende des Isolierpapiers 20 bei starkem Einrollen stark gebogen werden, so dass das Isolierpapier 20 das Einführen des Leiters in den Leiterschlitz 10h blockiert, was sich nachteilig auf den Montageprozess und die Isolationsleistung zwischen dem Eisenkern 10 und dem Leiter 30 nach der Montage auswirkt.

### Zusammenfassung der Erfindung

Die vorliegende Erfindung wurde erarbeitet, um die vorstehend beschriebenen Mängel des Standes der Technik überwinden. Eine Aufgabe der vorliegenden Erfindung besteht darin, eine neuartige Statoranordnung zur Verwendung in einem Motor und ein Montageverfahren dafür bereitzustellen, mit denen das Problem der gegenseitigen Behinderung zwischen Isolierpapier und dem Leiter während des Vorgangs des Einführens des Leiters in den Leiterschlitz in einem größeren Ausmaß vermieden werden kann als mit der Statoranordnung zur Verwendung in einem Motor, die vorstehend im Stand der Technik beschrieben wurde, wodurch nachteilige Auswirkungen auf die Montage und Isolationsleistung der Statoranordnung, die durch eine Behinderung verursacht werden, beseitigt werden. Eine weitere Aufgabe der vorliegenden Erfindung besteht darin, einen Motor bereitzustellen, der die vorstehende Statoranordnung zur Verwendung in einem Motor umfasst.

Um die vorstehend genannten Aufgaben zu erfüllen, werden die folgenden technischen Lösungen angewendet.

Die vorliegende Erfindung stellt eine Statoranordnung für einen Motor bereit, umfassend
einen Eisenkern, wobei der Eisenkern einen zylindrischen Eisenkernkörper und eine Vielzahl von Eisenkernzähnen umfasst, wobei die Vielzahl von Eisenkernzähnen entlang einer radialen Richtung des Eisenkernkörpers aus dem Eisenkernkörper hervorstehen und entlang einer Umfangsrichtung des Eisenkernkörpers angeordnet sind, wobei zwischen jeweils zwei in Umfangsrichtung benachbarten Eisenkernzähnen Leiterschlitze zum Aufnehmen von Leitern gebildet sind, wobei Seitenwände der Leiterschlitze, die durch die Eisenkernzähne gebildet sind, aufgeweitete Abschnitte umfassen, und wobei die aufgeweiteten Abschnitte einander in Umfangsrichtung gegenüberliegen und sich allmählich weiter voneinander entfernen, da sich die beiden in Richtung radialer Öffnungen der Leiterschlitze erstrecken; und
folienartige Isolatoren, wobei die folienartigen Isolatoren in den Leiterschlitzen derart aufgenommen sind, dass sie an Umfangswänden der Leiterschlitze angebracht sind und Enden der folienartigen Isolatoren an den aufgeweiteten Abschnitten angeordnet sind.
Vorzugsweise erstreckt sich eine Konturlinie des aufgeweiteten Abschnitts in einem Querschnitt orthogonal zu einer Mittelachse des Eisenkernkörpers entlang der radialen Richtung linear oder krummlinig.

Bevorzugter umfassen die Seitenwände außerdem äquidistante Abschnitte benachbart zu den aufgeweiteten Abschnitten, wobei die äquidistanten Abschnitte einander in Umfangsrichtung gegenüberliegen und ein Abstand in Umfangsrichtung zwischen den äquidistanten Abschnitten in radialer Richtung immer gleich ist. Besonders bevorzugt beträgt ein Winkel eines stumpfen Winkels, der im Querschnitt orthogonal zur Mittelachse des Eisenkernkörpers entlang der radialen Richtung durch die Konturlinie des aufgeweiteten Abschnitts und eine Konturlinie des äquidistanten Abschnitts gebildet ist, nicht weniger als 150 Grad.

Besonders bevorzugt besteht zwischen dem aufgeweiteten Abschnitt und dem äquidistanten Abschnitt ein nicht glatter Übergang oder ein glatter Übergang und der folienartige Isolator bildet an einer Verbindungsstelle zwischen dem aufgeweiteten Abschnitt und dem äquidistanten Abschnitt eine gekrümmte Form.

Besonders bevorzugt weist ein Ende des Eisenkernzahns an der radialen Öffnung des Leiterschlitzes einen Schlitzkeilabschnitt auf, der in Richtung der Innenseite des Leiterschlitzes hervorsteht, und der Schlitzkeilabschnitt ist benachbart zu dem aufgeweiteten Abschnitt.

Besonders bevorzugt erstreckt sich das Ende des folienartigen Isolators bis zu einer Fläche des Schlitzkeilabschnitts benachbart zu dem aufgeweiteten Abschnitt. Besonders bevorzugt umfasst die Statoranordnung zur Verwendung in einem Motor Leiter und eine Vielzahl von Leitern sind jeweils in jedem Leiterschlitz, der durch den Eisenkern gebildet ist, aufgenommen und installiert.

Besonders bevorzugt ist der Leiter eine Wellenwicklung.

Die vorliegende Erfindung stellt außerdem ein Montageverfahren für die Statoranordnung zur Verwendung in einem Motor gemäß einer der vorstehenden technischen Lösungen bereit, wobei das Montageverfahren die folgenden Schritte umfasst:
Einsetzen des folienartigen Isolators in den Leiterschlitz, wobei sich der folienartige Isolator an einer Grenzfläche des aufgeweiteten Abschnitts und des äquidistanten Abschnitts der Seitenwand des Leiterschlitzes krümmt, der folienartige Isolator an der Umfangswand des Leiterschlitzes angebracht wird und ein Ende des folienartigen Isolators am aufgeweiteten Abschnitt angeordnet wird; und
Einführen des Leiters in den Leiterschlitz entlang der radialen Richtung.

Die vorliegende Erfindung stellt außerdem einen Motor wie folgt bereit, der die Statoranordnung zur Verwendung in einem Motor gemäß einer der vorstehenden technischen Lösungen umfasst.

Durch die Übernahme der vorstehenden technischen Lösungen stellt die vorliegende Erfindung die Statoranordnung zur Verwendung in einem Motor und ein Montageverfahren dafür bereit, wobei ein aufgeweiteter Abschnitt an einem Abschnitt der Seitenwand des Leiterschlitzes in der Nähe der radialen Öffnung des Leiterschlitzes gebildet wird und das Ende des folienartigen Isolators (z. B. Isolierpapier) am aufgeweiteten Abschnitt angeordnet ist. Somit kommt es beim Einführen des Leiters in den Leiterschlitz in einem Zustand, in dem der Leiter an der Umfangswand des Leiterschlitzes angebracht ist, nicht zu einer unerwünschten Behinderung zwischen dem Leiter und dem folienartigen Isolator, wodurch durch eine Behinderung zwischen dem Leiter und dem folienartigen Isolator verursachte nachteilige Auswirkungen beim Montagevorgang der Statoranordnung zur Verwendung in einem Motor vermieden werden und gleichzeitig eine gute Isolationsleistung zwischen dem Eisenkern und dem Leiter gewährleistet wird. Die vorliegende Erfindung stellt auch einen Motor bereit, der die Statoranordnung zur Verwendung in einem Motor umfasst, der den gleichen vorteilhaften Effekt erzeugen kann.

### Kurzbeschreibung der Zeichnungen

FIG. 1A zeigt einen Teilmontageprozess einer Statoranordnung zur Verwendung in einem Motor, wobei ein Leiter vorbereitet wird, um entlang einer Pfeilrichtung in einen Leiterschlitz eines Eisenkerns eingeführt zu werden.
FIG. 1B zeigt einen Teilmontageprozess der Statoranordnung zur Verwendung in einem Motor in FIG. 1A, wobei der Leiter an einer radialen Öffnung des Leiterschlitzes angeordnet ist und bewirkt, dass sich ein Ende des Isolierpapiers einrollt.
FIG. 2A ist ein schematisches Diagramm, das eine Teilstruktur eines Eisenkerns der Statoranordnung zur Verwendung in einem Motor gemäß einer Ausführungsform der vorliegenden Erfindung zeigt.
FIG. 2B ist ein schematisches Diagramm, das einen Zustand zeigt, nachdem das Isolierpapier in den Leiterschlitz des Eisenkerns in FIG. 2A installiert wurde.
Fig. 2C bis 2E sind schematische Diagramme, die einen Vorgang des Einführens des Leiters in den Leiterschlitz zeigen, der mit dem Isolierpapier in FIG. 2B installiert wird, wobei der Leiter in Pfeilrichtung in den Leiterschlitz eingeführt wird.

### Ausführliche Beschreibung von Ausführungsformen

Beispielhafte Implementierungen der vorliegenden Erfindung werden nachstehend unter Bezugnahme auf die Zeichnungen beschrieben. Es sollte beachtet werden, dass sich "axiale Richtung", "radiale Richtung" und "Umfangsrichtung" auf eine axiale Richtung, eine radiale Richtung bzw. eine Umfangsrichtung einer Statoranordnung zur Verwendung in einem Motor (einen Eisenkernkörper eines Eisenkerns) beziehen, sofern nicht anders angegeben.

Ein Aufbau einer Statoranordnung zur Verwendung in einem Motor gemäß einer Ausführungsform der vorliegenden Erfindung wird unter Bezugnahme auf die beigefügten Zeichnungen der Beschreibung beschrieben.

### (Aufbau der Statoranordnung zur Verwendung in einem Motor)

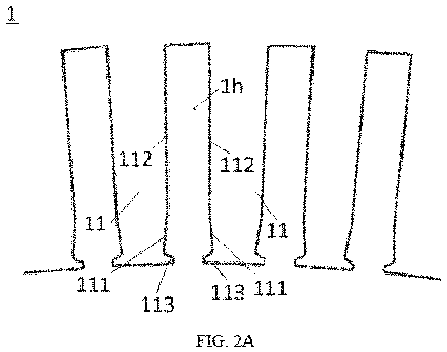

Unter Bezugnahme auf FIG. 2A bis 2E umfasst die Statoranordnung zur Verwendung in einem Motor gemäß einer Ausführungsform der vorliegenden Erfindung einen Eisenkern 1, Isolierpapier 2 und einen Leiter 3.

Insbesondere umfasst der Eisenkern 1 in der vorliegenden Ausführungsform einen zylindrischen Eisenkernkörper und eine Vielzahl von Eisenkernzähnen 11, die entlang der radialen Richtung vom Eisenkernkörper hervorstehen und entlang der Umfangsrichtung angeordnet sind, und die FIG. 2A bis 2E erfassen lediglich eine Teilstruktur des Eisenkerns 1, die einen Teil der Eisenkernzähne 11 beinhaltet. Zwischen jeweils zwei benachbarten Eisenkernzähnen 11 sind Leiterschlitze 1h zur Aufnahme des Isolierpapiers 2 und des Leiters 3 gebildet, und jeder Leiterschlitz 1h weist eine radiale Öffnung auf, die sich zur radial inneren Seite hin öffnet.

Eine Seitenwand des Leiterschlitzes 1h, die durch die Eisenkernzähne 11 gebildet wird, beinhaltet einen aufgeweiteten Abschnitt 111 und einen äquidistanten Abschnitt 112 benachbart zu dem aufgeweiteten Abschnitt 111 (benachbart zueinander und miteinander verbunden), und der aufgeweitete Abschnitt 111 ist an einem Abschnitt der Seitenwand des Leiterschlitzes 1h in der Nähe der radialen Öffnung angeordnet und der aufgeweitete Abschnitt 111 ist an der radial inneren Seite des äquidistanten Abschnitts 112 angeordnet. Die aufgeweiteten Abschnitte 111 zweier gegenüberliegender Seitenwände des Leiterschlitzes 1h sind einander in Umfangsrichtung zugewandt und ein Abstand der aufgeweiteten Abschnitte 111 in Umfangsrichtung nimmt zur radialen Öffnung des Leiterschlitzes 1h hin allmählich zu. Die äquidistanten Abschnitte 112 liegen einander in Umfangsrichtung gegenüber und ein Abstand zwischen den äquidistanten Abschnitten 112 in Umfangsrichtung ist in radialer Richtung immer gleich. Da der aufgeweitete Abschnitt 111 an dem Teil der Seitenwand des Leiterschlitzes 1h in der Nähe der radialen Öffnung gebildet ist, ist der Leiterschlitz 1h auf diese Weise kein gerader Schlitz wie der Leiterschlitz 10h nach dem Stand der Technik. Des Weiteren bildet der Leiterschlitz 1h für den Fall, dass ein Ende des Isolierpapiers 2 am aufgeweiteten Abschnitt 111 angeordnet ist, einen größeren Raum an einer Position, an der das Ende des Isolierpapiers 2 angeordnet ist, was das Einführen des Leiters 3 in den Leiterschlitz 1h erleichtert, ohne dass das Ende des Isolierpapiers 2 beeinträchtigt wird.

In dieser Ausführungsform ist der Übergang zwischen dem aufgeweiteten Abschnitt 111 und dem äquidistanten Abschnitt 112 nicht glatt, und das Isolierpapier 2 bildet an einer Verbindungsstelle (einer Grenzlinie, die sich entlang der axialen Richtung erstreckt) zwischen dem aufgeweiteten Abschnitt 111 und dem äquidistanten Abschnitt 112 eine gebogene Form, so dass das Isolierpapier 2 immer an der Seitenwand des Leiterschlitzes 1h angebracht werden kann. Darüber hinaus erstrecken sich eine Konturlinie des aufgeweiteten Abschnitts 111 und eine Konturlinie des äquidistanten Abschnitts 112 in einem Querschnitt orthogonal zu einer Mittelachse des Eisenkernkörpers entlang der radialen Richtung beide linear und in einem Winkel eines stumpfen Winkels, der durch die Konturlinie des aufgeweiteten Abschnitts 111 und die Konturlinie des äquidistanten Abschnitts 112 gebildet wird und beispielsweise 170 Grad betragen kann. Auf diese Weise wird die Leistung des Eisenkerns 1 auch dann nicht beeinträchtigt, wenn der aufgeweitete Abschnitt 111 gebildet wird.

Darüber hinaus weist ein Ende des Eisenkernzahns 11 an der radialen Öffnung des Leiterschlitzes 1h einen Schlitzkeilabschnitt 113 auf, der in Richtung der Innenseite des Leiterschlitzes 1h hervorsteht, und der Schlitzkeilabschnitt 113 ist benachbart zu dem aufgeweiteten Abschnitt 111. Flächen der Schlitzkeilabschnitte 113, die zu den aufgeweiteten Abschnitten 111 benachbart sind, nähern sich einander an, während sie sich schräg zur radial inneren Seite erstrecken, und das Ende des Isolierpapiers 2 erstreckt sich bis zur Fläche des Schlitzkeilabschnitts 113, der benachbart zu dem aufgeweiteten Abschnitt 111 ist, so dass der Schlitzkeilabschnitt 113 nicht nur die Funktion hat, einen Schlitzkeil (nicht gezeigt) festzuklemmen, sondern auch dazu verwendet werden kann, das Ende des Isolierpapiers 2 anzuhalten.

In dieser Ausführungsform ist das Isolierpapier 2 im Leiterschlitz 1h derart aufgenommen, dass es an einer Umfangswand des Leiterschlitzes 1h angebracht wird, und ein radial inneres Ende des Isolierpapiers 2 ist am aufgeweiteten Abschnitt 111 angeordnet. Es versteht sich, dass das Isolierpapier 2 in Teilen der Zeichnungen oder teilweise an Positionen in den Zeichnungen nicht fest an der Schlitzwand des Leiterschlitzes 1h angebracht ist, um das Isolierpapier 2 klar von einer Schlitzwand des Leiterschlitzes 1h zu unterscheiden, und dass in der vorliegenden Anmeldung erwartet wird, dass das Isolierpapier 2 an der Schlitzwand des Leiterschlitzes 1h angebracht wird. Darüber hinaus kann es aufgrund von Herstellungs- oder Montagefehlern usw. in einigen Bereichen dazu kommen, dass das Isolierpapier 2 nicht fest an der Schlitzwand des Leiterschlitzes 1h angebracht ist, und solche Fehler weichen nicht vom Kern der vorliegenden Erfindung ab und sollten dennoch als im Schutzumfang der vorliegenden Anmeldung liegend betrachtet werden.

In dieser Ausführungsform ist der Leiter 3 eine Wellenwicklung. In jeden Leiterschlitz 1h ist eine Vielzahl von Leitern 3 eingeführt, wobei die Vielzahl von Leitern 3 in radialer Richtung im gleichen Leiterschlitz 1h angeordnet sein kann.

Nachfolgend wird ein Montageverfahren für die Statoranordnung zur Verwendung in einem Motor gemäß einer Ausführungsform der vorliegenden Erfindung unter Bezugnahme auf die beigefügten Zeichnungen der Beschreibung beschrieben.

### (Montageverfahren für die Statoranordnung)

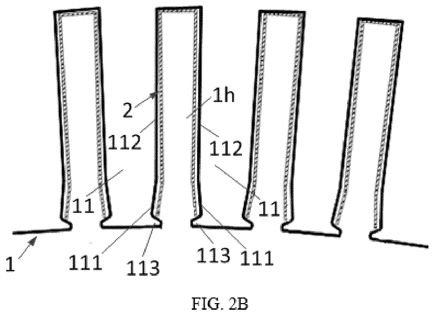

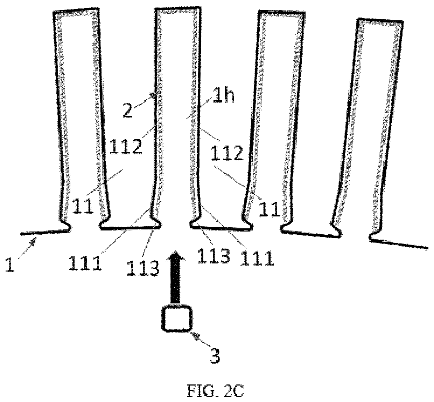

Insbesondere umfasst das Montageverfahren für die Statoranordnung zur Verwendung in einem Motor gemäß einer Ausführungsform der vorliegenden Erfindung die folgenden Schritte:
wie in den FIG. 2A und 2B gezeigt, Einsetzen des Isolierpapiers 2 in den Leiterschlitz 1h, wobei sich das Isolierpapier 2 an einer Grenzfläche des aufgeweiteten Abschnitts 111 und des äquidistanten Abschnitts 112 der Seitenwand des Leiterschlitzes 1h krümmt, das Isolierpapier 2 an der Umfangswand des Leiterschlitzes 1h angebracht wird und das Ende des Isolierpapiers 2 am aufgeweiteten Abschnitt 111 angeordnet wird; und
wie in den FIG. 2C bis 2E gezeigt, Einführen des Leiters 3 in den Leiterschlitz 1h entlang der radialen Richtung.

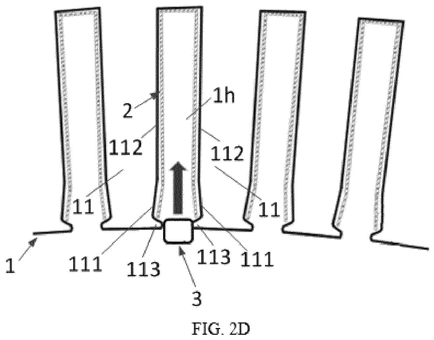

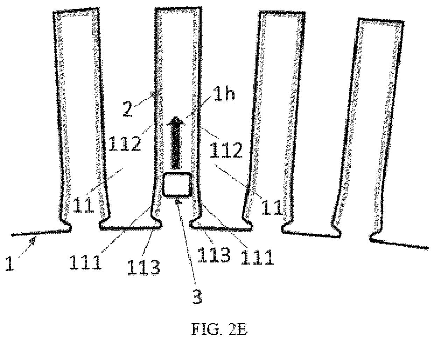

Beim Einführen des Leiters 3 in den Leiterschlitz 1h zeigt FIG. 2C einen Zustand, in dem der Leiter 3 zum Einführen in den Leiterschlitz 1h vorbereitet wird, wobei der Leiter 3 zum Einführen in den Leiterschlitz 1h entlang der durch den Pfeil angezeigten Richtung vorbereitet wird. FIG. 2D zeigt einen Zustand, in dem der Leiter 3 die radiale Öffnung des Leiterschlitzes 1h erreicht. Da die Seitenwand des Leiterschlitzes 1h der vorliegenden Erfindung mit der Struktur des aufgeweiteten Abschnitts 111 gebildet ist, wie aus dieser Figur deutlich ersichtlich ist, ist auch das Isolierpapier 2 entsprechend an der Seitenwand des Leiterschlitzes 1h angebracht und das Ende des Isolierpapiers 2 ist an dem aufgeweiteten Abschnitt 111 angeordnet, so dass der Leiter 3 beim Eintritt in die radiale Öffnung des Leiterschlitzes 1h nicht in unerwünschter Weise mit dem Isolierpapier 2 in Berührung kommt, wie in FIG. 2D gezeigt. FIG. 2E zeigt, dass der Leiter 4 im Wesentlichen reibungslos durch den aufgeweiteten Abschnitt 111 des Leiterschlitzes 1h hindurchgegangen ist und dabei ist, in den äquidistanten Abschnitt 112 des Leiterschlitzes 1h eingeführt zu werden. Da der Leiter 3 bereits weit vom Ende des Isolierpapiers 2 entfernt ist, kann es auf diese Weise nicht dazu kommen, dass sich das Isolierpapier 2 unerwünschterweise einrollt, selbst wenn der Raum des Leiterschlitzes 1h am äquidistanten Abschnitt 112 kleiner wird, was bewirken kann, dass das Isolierpapier 2 mit dem Leiter 3 in Kontakt kommt.

Ferner stellt die vorliegende Erfindung auch einen Motor bereit, der die Statoranordnung zur Verwendung in einem Motor mit dem vorstehenden Aufbau umfasst, und für den Motor kann auch das vorstehend erwähnte Montageverfahren für die Statoranordnung zur Verwendung in einem Motor übernommen werden. Natürlich ist die vorliegende Erfindung nicht auf die vorstehend aufgeführten Ausführungsformen beschränkt, und ein Fachmann könnte verschiedene Modifikationen an den vorstehend aufgeführten Ausführungsformen der vorliegenden Erfindung mithilfe der vorliegenden Erfindung vornehmen, ohne vom Schutzumfang der vorliegenden Erfindung abzuweichen. Zusätzlich erfolgt eine ergänzende Erklärung wie folgt.
(i) Es ist zu beachten, dass das in der vorliegenden Erfindung beschriebene Anbringen des Isolierpapiers 2 an der Umfangswand des Leiterschlitzes 1h bedeutet, dass das Isolierpapier 2 in einer nicht-haftenden Weise fest an der Umfangswand des Leiterschlitzes 1h angebracht werden kann (einschließlich an Seitenwänden, die sich auf beiden Seiten in Umfangsrichtung befinden, und einer oberen Wand, die sich an einer radial äußeren Seite befindet). In diesem Fall kann das Isolierpapier 2 durch seine eigene Spannung fest an der Umfangswand des Leiterschlitzes 1h angebracht werden.
   Bevor beispielsweise das Isolierpapier 2 in den Leiterschlitz 1h eingeführt wird, ist ein Abstand zwischen gegenüberliegenden Enden nahe der Öffnung des Isolierpapiers 2 etwas größer als die Breite entsprechender Positionen der aufgeweiteten Abschnitte 111 des Leiterschlitzes 1h (ungefähr entlang der Umfangsrichtung des Eisenkerns). Nachdem das Isolierpapier 2 in den Leiterschlitz 1h eingeführt wurde, werden die gegenüberliegenden Enden in der Nähe der Öffnung des Isolierpapiers 2 leicht zusammengedrückt, um gut am aufgeweiteten Abschnitt 111 angebracht zu werden.
(ii) Wie in den vorstehenden spezifischen Ausführungsformen dargestellt, bildet das Isolierpapier 2 an der Verbindungsstelle des aufgeweiteten Abschnitts 111 und des äquidistanten Abschnitts 112 eine gebogene Form, damit das Isolierpapier 2 besser an der Seitenwand des Leiterschlitzes 1h angebracht werden kann; insbesondere entspricht die gebogene Position der gebogenen Form einer Grenzlinie des aufgeweiteten Abschnitts 111 und des äquidistanten Abschnitts 112. Da in den vorstehenden spezifischen Ausführungsformen die Grenzlinie zwischen dem aufgeweiteten Abschnitt 111 und dem äquidistanten Abschnitt 112 in einer nicht glatten Übergangsform gebildet ist, kann eine entsprechende Biegung des Isolierpapiers 2 ohne weiteres implementiert werden.
   Obwohl in den vorstehenden spezifischen Ausführungsformen dargestellt wurde, dass es an der Verbindungsstelle des aufgeweiteten Abschnitts 111 und des äquidistanten Abschnitts 112 einen nicht glatten Übergang gibt, ist die vorliegende Erfindung nicht darauf beschränkt. Die Verbindungsstelle kann als glatter Übergang gestaltet werden und das Isolierpapier 2 kann sich an der Verbindungsstelle entsprechend krümmen, was die Umsetzungswirkung der vorliegenden Erfindung nicht beeinträchtigt.
(iii) Wie in den vorstehenden spezifischen Ausführungsformen dargestellt, beträgt der stumpfe Winkel, der zwischen der Konturlinie des aufgeweiteten Abschnitts 111 und der Konturlinie des äquidistanten Abschnitts 112 im Querschnitt gebildet wird, 170 Grad, um die Leistung des Eisenkerns 1 sicherzustellen. Tests haben gezeigt, dass die Leistung des Eisenkerns 1 nicht beeinträchtigt wird, wenn der stumpfe Winkel, der zwischen der Konturlinie des aufgeweiteten Abschnitts 111 und der Konturlinie des äquidistanten Abschnitts 112 im Querschnitt gebildet wird, nicht kleiner als 150 Grad ist.
   Obwohl in den spezifischen Ausführungsformen der vorliegenden Erfindung dargestellt ist, dass die Konturlinie des aufgeweiteten Abschnitts 111 im Querschnitt eine gerade Linie ist, kann sie außerdem auch als Kurve implementiert werden, was die Umsetzungswirkung der vorliegenden Erfindung nicht beeinträchtigt.
(iv) Obwohl in den vorstehenden spezifischen Ausführungsformen dargestellt wurde, dass das Isolierpapier 2 als folienartiger Isolator verwendet wird, ist die vorliegende Erfindung nicht darauf beschränkt, und andere folienartige Isolatoren, die in der Lage sind, die gleichen oder ähnliche Funktionen zu erfüllen, können verwendet werden. Als folienartiger Isolator kann beispielsweise folienartiges Isolierharz verwendet werden.
(v) Auch wenn es in den vorstehenden spezifischen Ausführungsformen nicht klar dargestellt ist, versteht es sich, dass die Statoranordnung zur Verwendung in einem Motor gemäß der vorliegenden Erfindung auch einen Schlitzkeil umfasst, der aus einem Isoliermaterial gebildet ist, und der Schlitzkeil kann entlang der axialen Richtung in den Leiterschlitz eingeführt und am Schlitzkeilabschnitt festgeklemmt werden, wodurch verhindert wird, dass der Leiter 3 aus dem Leiterschlitz 1h herauskommt.
(vi) Obwohl in den vorstehenden spezifischen Ausführungsformen dargestellt wurde, dass der Leiterschlitz 1h eine radiale Öffnung aufweist, die sich zur radial inneren Seite hin öffnet, ist die vorliegende Erfindung nicht darauf beschränkt. Der Leiterschlitz 1h muss nicht mit der radialen Öffnung gebildet sein, die sich zur radial inneren Seite hin öffnet, sondern kann stattdessen mit einer radialen Öffnung gebildet sein, die sich zur radial äußeren Seite hin öffnet; mit anderen Worten, der Leiterschlitz ist nicht am inneren Umfangsabschnitt des Eisenkerns, sondern am äußeren Umfangsabschnitt des Eisenkerns gebildet.

### Beschreibung von Bezugszeichen

- 10: Eisenkern
- 10h: Leiterschlitz
- 20: Isolierpapier
- 30: Leiter
- 1: Eisenkern
- 1h: Leiterschlitz
- 11: Eisenkernzahn
- 111: aufgeweiteter Abschnitt
- 112: äquidistanter Abschnitt
- 113: Schlitzkeilabschnitt
- 2: Isolierpapier
- 3: Leiter.

## Patentansprüche

1. Statoranordnung für einen Motor, umfassend
einen Eisenkern (1), wobei der Eisenkern (1) einen zylindrischen Eisenkernkörper und eine Vielzahl von Eisenkernzähnen (11) umfasst, wobei die Vielzahl von Eisenkernzähnen (11) entlang einer radialen Richtung des Eisenkernkörpers aus dem Eisenkernkörper hervorsteht und entlang einer Umfangsrichtung des Eisenkernkörpers angeordnet ist, wobei zwischen jeweils zwei in Umfangsrichtung benachbarten Eisenkernzähnen (11) Leiterschlitze (1h) zum Aufnehmen von Leitern (3) gebildet sind, wobei Seitenwände der Leiterschlitze (1h), die durch die Eisenkernzähne (11) gebildet sind, aufgeweitete Abschnitte (111) umfassen, und wobei die aufgeweiteten Abschnitte (111) einander in Umfangsrichtung gegenüberliegen und sich allmählich weiter voneinander entfernen, da sich die beiden in Richtung radialer Öffnungen der Leiterschlitze (1h) erstrecken; und folienartige Isolatoren (2), wobei die folienartigen Isolatoren (2) in den Leiterschlitzen (1h) derart aufgenommen sind, dass sie an Umfangswänden der Leiterschlitze (1h) angebracht sind und Enden der folienartigen Isolatoren (2) an den aufgeweiteten Abschnitten (111) angeordnet sind.

2. Statoranordnung zur Verwendung in einem Motor nach Anspruch 1, wobei sich eine Konturlinie des aufgeweiteten Abschnitts (111) in einem Querschnitt orthogonal zu einer Mittelachse des Eisenkernkörpers entlang der radialen Richtung linear oder krummlinig erstreckt.

3. Statoranordnung zur Verwendung in einem Motor nach Anspruch 1 oder 2, wobei die Seitenwände außerdem äquidistante Abschnitte (112) benachbart zu den aufgeweiteten Abschnitten (111) umfassen, wobei die äquidistanten Abschnitte (112) einander in Umfangsrichtung gegenüberliegen und ein Abstand in Umfangsrichtung zwischen den äquidistanten Abschnitten (112) in radialer Richtung immer gleich ist.

4. Statoranordnung zur Verwendung in einem Motor nach Anspruch 3, wobei ein Winkel eines stumpfen Winkels, der im Querschnitt orthogonal zur Mittelachse des Eisenkernkörpers entlang der radialen Richtung durch die Konturlinie des aufgeweiteten Abschnitts (111) und eine Konturlinie des äquidistanten Abschnitts (112) gebildet ist, nicht weniger als 150 Grad beträgt.

5. Statoranordnung zur Verwendung in einem Motor nach Anspruch 3 oder 4, wobei zwischen dem aufgeweiteten Abschnitt (111) und dem äquidistanten Abschnitt (112) ein nicht glatter Übergang oder ein glatter Übergang besteht und der folienartige Isolator (2) an einer Verbindungsstelle zwischen dem aufgeweiteten Abschnitt (111) und dem äquidistanten Abschnitt (112) eine gekrümmte Form bildet.

6. Statoranordnung zur Verwendung in einem Motor nach einem der Ansprüche 1 bis 5, wobei ein Ende des Eisenkernzahns (11) an der radialen Öffnung des Leiterschlitzes (1h) einen Schlitzkeilabschnitt (113) aufweist, der in Richtung der Innenseite des Leiterschlitzes (1h) hervorsteht, und der Schlitzkeilabschnitt (113) benachbart zu dem aufgeweiteten Abschnitt (111) ist.

7. Statoranordnung zur Verwendung in einem Motor nach Anspruch 6, wobei sich das Ende des folienartigen Isolators (2) bis zu einer Fläche des Schlitzkeilabschnitts (113) benachbart zu dem aufgeweiteten Abschnitt (111) erstreckt.

8. Statoranordnung zur Verwendung in einem Motor nach einem der Ansprüche 1 bis 7, wobei die Statoranordnung zur Verwendung in einem Motor Leiter (3) umfasst und eine Vielzahl von Leitern (3) jeweils in jedem Leiterschlitz (1h), der durch den Eisenkern (1) gebildet ist, aufgenommen und installiert ist.

9. Statoranordnung zur Verwendung in einem Motor nach Anspruch 8, wobei der Leiter (3) eine Wellenwicklung ist.

10. Montageverfahren für die Statoranordnung zur Verwendung in einem Motor nach einem der Ansprüche 1 bis 9, wobei das Montageverfahren die folgenden Schritte umfasst:
Einsetzen des folienartigen Isolators (2) in den Leiterschlitz (1h), wobei sich der folienartige Isolator (2) an einer Grenzfläche des aufgeweiteten Abschnitts (111) und des äquidistanten Abschnitts (112) der Seitenwand des Leiterschlitzes (1h) krümmt, der folienartige Isolator (2) an der Umfangswand des Leiterschlitzes (1h) angebracht wird und ein Ende des folienartigen Isolators (2) am aufgeweiteten Abschnitt (111) angeordnet wird; und
Einführen des Leiters (3) in den Leiterschlitz (1h) entlang der radialen Richtung.

11. Motor, der die Statoranordnung zur Verwendung in einem Motor gemäß einem der Ansprüche 1 bis 9 umfasst.
